# DEMANDE DE BREVET EUROPEEN

(11) **EP 2 236 372 A1**
(43) Date de publication de la demande: **06.10.2010**
(21) Numéro de dépôt: 10152516.0
(22) Date de dépôt: 03.02.2010
(51) Int. Cl.: B60T 13/52, B60T 17/22

(54) **Dispositif de détection du fonctionnement d'un servomoteur d'assistance au freinage**

(30) Priorité: 03.04.2009 FR 0901654
(71) Demandeur: Robert Bosch GmbH, 70442 Stuttgart (DE)
(72) Inventeur: Fourcade, Jean, 35890, LAILLE (FR); Richard, Philippe, 77500, CHELLES (FR)
(74) Mandataire: Hurwic, Aleksander Wiktor

(57) **Abrégé**

L'invention a pour objet un dispositif de détection du fonctionnement d'un servomoteur d'assistance au freinage pour véhicule automobile.

Ce dispositif de détection est prévu pour détecter un déplacement du palpeur (82, 83). Selon l'invention, ce dispositif de détection comporte une pièce de montage (81) qui est destinée à être fixée à une paroi (50) du servomoteur d'assistance au freinage (5). Le palpeur (82, 83) est monté en coulissement dans cette pièce de montage (81) et un support de détecteur (71) est monté en coulissement sur cette pièce de montage (81). Un dispositif d'immobilisation (72) permet d'immobiliser le support de détecteur (71) sur la pièce de montage (81).

Applications: Servomoteur d'assistance au freinage de véhicule.

## Description

L'invention a pour objet un dispositif de détection d'une commande de freinage de véhicule notamment pour véhicule automobile. Elle a plus particulièrement pour objet un dispositif permettant de détecter un mouvement de la paroi mobile ou jupe d'un servomoteur d'assistance au freinage. L'invention a également pour objet l'application de ce dispositif de détection à un servomoteur d'assistance au freinage d'un véhicule. Elle aussi pour objet un procédé de réglage d'un tel dispositif de détection.

Un système de freinage d'un véhicule automobile comporte couramment un servomoteur d'assistance au freinage 5 commandé par une tige de commande 1 laquelle est actionnée par la pédale de frein (non représentée) du véhicule. Comme cela est connu dans la technique, la tige de commande 1 provoque le déplacement d'un ensemble de vanne trois voies 2 et de piston 20. Le piston 20 est solidaire d'une paroi mobile appelée jupe 3 interne au servomoteur et qui sépare, avec une membrane d'étanchéité 4, la chambre avant de la chambre arrière du servomoteur. Une tige de poussée 62 permet de transmettre les efforts de freinage du piston 20 au maître cylindre 6. Celui-ci transmet par des sorties 60 et 61, des efforts de freinage au circuit hydraulique de freinage du véhicule. Un tel dispositif est parfaitement connu dans la technique et ne nécessite pas d'explication supplémentaire.

On rappelle simplement que lors d'une commande de freinage, la jupe 3 du servomoteur se déplace selon la flèche F1 entre la paroi avant 50 et la paroi arrière 51 du servomoteur.

Dans les véhicules automobiles l'actionnement de la pédale de frein par le conducteur et par suite la commande de freinage qui peut en résulter est détectée, dans les systèmes connus, par différents systèmes. Dans les systèmes les plus anciens un contact électrique, commandé généralement par la tige de commande de la pédale de frein, est inséré dans un circuit et permet par ouverture et fermeture de ce circuit électrique de signaler la commande de la pédale de frein. D'autres systèmes utilisent également des systèmes magnétiques et utilisent des variations de champ magnétiques induites. Ces systèmes de détection permettent notamment de commander les feux de signalisation de freinage du véhicule (feux stop).

On peut également détecter une commande de freinage par détection du déplacement de la jupe du servomoteur d'assistance au freinage.

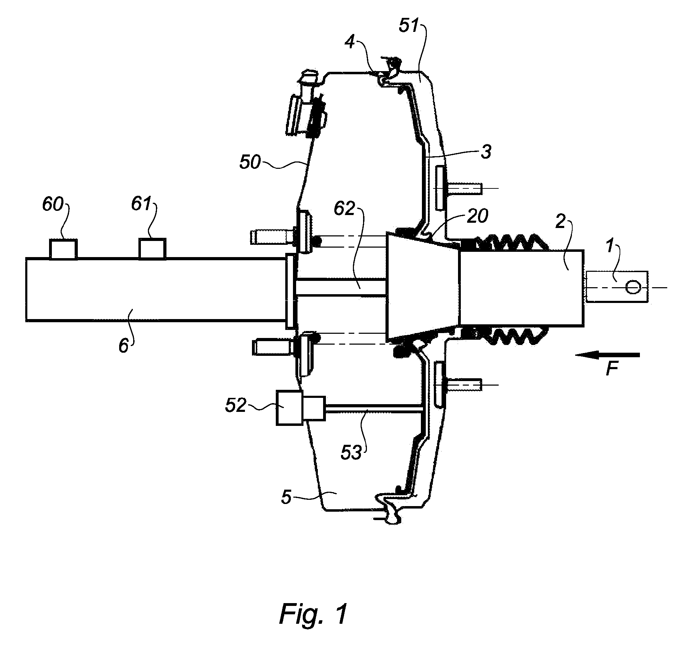

Par exemple, on peut prévoir, comme cela est représenté sur la figure 1, un détecteur 52 qui est fixé dans le couvercle 50 du servomoteur d'assistance au freinage 5. Ce détecteur 53 possède un palpeur 53 qui est en contact avec la jupe 3 du servomoteur. L'ensemble palpeur 53 et détecteur 52 permet alors de détecter les mouvements de la jupe 3. On trouvera une description d'un tel système dans la demande de brevet français FR 2 676 695.

Cependant, dans les systèmes connus de ce type, les détecteurs sont conçus pour le servomoteur d'assistance au freinage sur lequel ils sont destinés à être montés. L'invention permet de résoudre cet inconvénient. De plus l'invention permet de faciliter le réglage du détecteur.

L'invention a donc pour objet un dispositif de détection du fonctionnement d'un servomoteur d'assistance au freinage pour véhicule automobile. Ce servomoteur comporte une paroi mobile ou jupe qui permet de transmettre une force de freinage amplifiée à un maître cylindre de frein. Le dispositif de détection est destiné à être monté sur une paroi du servomoteur d'assistance au freinage et possède un palpeur mobile destiné à être en contact avec ladite jupe de façon à détecter un déplacement de la jupe. Selon l'invention, le dispositif de détection comporte une pièce de montage qui est destinée à être fixée à une paroi du servomoteur d'assistance au freinage. Le palpeur mobile est monté en coulissement dans cette pièce de montage et un support de détecteur est monté en coulissement sur cette pièce de montage. Un dispositif d'immobilisation permet d'immobiliser le détecteur sur la pièce de montage.

Selon une forme de réalisation de l'invention, la pièce de montage comporte une surface de montage et le support de détecteur possède une pièce de coulissement qui entoure ladite surface de montage. Ledit dispositif d'immobilisation comporte une tige de verrouillage destinée à traverser la pièce de coulissement et à être en contact avec la surface de montage.

Avantageusement, la tige de verrouillage est une vis.

Selon une variante de réalisation de l'invention, la pièce de montage comporte une surface de montage et une bride de montage coopère avec le support de détecteur pour enserrer la surface de montage. Un dispositif de blocage permet alors de serrer la bride contre le support de détecteur.

Avantageusement, ledit dispositif de blocage permettant de serrer la bride contre le support de détecteur est une vis.

Selon une forme de réalisation avantageuse, le support de détecteur comporte un détecteur.

Selon une variante de réalisation, ce détecteur et le support de détecteur sont en une seule pièce.

Selon une forme de réalisation avantageuse de l'invention, le détecteur est un détecteur magnétique.

Le support de détection, la pièce de montage, sont alors de préférence en matériaux de faibles perméabilités magnétiques.

Selon une forme de réalisation le palpeur est en matériau de bonne perméabilité magnétique.

Selon une variante de réalisation, le palpeur est en matériau de faible perméabilité magnétique et il comporte un élément en matériau aimanté ou de bonne perméabilité magnétique.

Avantageusement, ledit élément est une bague placée autour dudit palpeur.

L'invention a également pour objet un procédé de réglage d'un servomoteur équipé d'un dispositif de détection tel que décrit précédemment. Ce procédé comporte les étapes suivantes:
- choix d'un palpeur dont la longueur est adaptée à un servomoteur d'assistance au freinage sur lequel doit être monté le dispositif de détection et notamment à la distance qui sépare la face avant de ce servomoteur de sa jupe lorsque le servomoteur est au repos (absence de commande freinage),
- mise en place du palpeur dans la pièce de montage,
- mise en place du support de détecteur sur la pièce de montage,
- mise en place et fixation de la pièce de montage sur la face avant du servomoteur d'assistance au freinage,
- réglage de la position du support de détecteur sur la pièce de montage,
- fixation du support de détecteur sur la pièce de montage à l'aide du dispositif d'immobilisation.

L'invention a également pour objet un servomoteur d'assistance au freinage comportant un dispositif de détection tel que décrit précédemment. Par ailleurs, ce servomoteur peut appliquer le procédé décrit précédemment.

Les différents objets et caractéristiques de l'invention apparaîtront plus clairement dans la description qui va suivre et dans les figures annexées qui représentent:
- la figure 1, une vue en coupe d'un exemple d'un servomoteur d'assistance au freinage connu dans la technique,
- la figure 2, une vue en coupe d'un exemple de réalisation d'un servomoteur d'assistance au freinage équipé d'un dispositif de détection l'invention,
- la figure 3, une vue en perspective d'un exemple de réalisation du dispositif de détection selon l'invention,
- la figure 4, une vue en perspective éclatée du dispositif de détection de la figure 3,
- la figure 5, une vue en coupe d'un détail du dispositif de réglage du dispositif de détection selon l'invention,
- la figure 6, une vue en perspective du dispositif de la figure 5,
- la figure 7, une vue en perspective d'une variante de réalisation du dispositif de détection de la figure 7,
- les figure 8 et 9, respectivement, une vue en bout et une vue éclatée du dispositif de détection de la figure 7.

### DESCRIPTION DETAILLEE

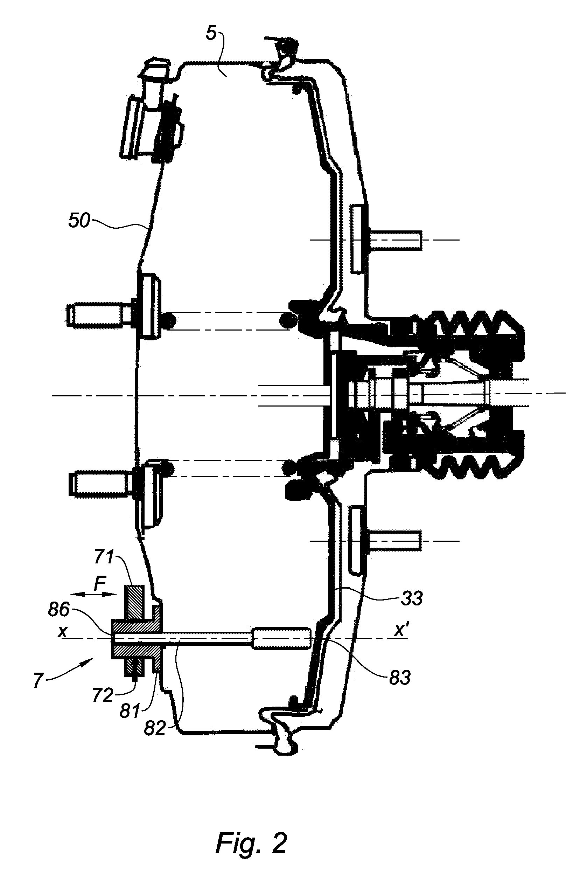

En se reportant à la figure 2, on va donc décrire un exemple réalisation d'un servomoteur d'assistance au freinage équipé d'un dispositif de détection selon l'invention.

Ce servomoteur d'assistance au freinage 5 est tel que celui décrit précédemment et représenté par la figure 1. Il comporte donc une paroi mobile ou jupe 3 permettant de transmettre un effort de freinage amplifié. Il comporte également un dispositif de détection 7 qui est fixé dans la paroi 50 du servomoteur et qui permet de détecter les mouvements de la jupe 3.

Le dispositif de détection 7 est réalisé selon l'invention. Il comporte:
- une pièce de montage 81 qui est fixé sur la paroi 50 du servomoteur d'assistance au freinage 5,
- une tige de palpeur 82 qui coulisse dans un trou 86 de la pièce de montage 81,
- un palpeur 83 monté à une extrémité de la tige 82 et destiné à être en contact avec la jupe 3 du servomoteur,
- un détecteur 71 monté sur la pièce de montage 81 de façon à pouvoir coulisser selon la flèche F.
- un dispositif d'immobilisation 72 permettant d'immobiliser le détecteur 71 sur la pièce de montage 81.

Le détecteur 71 permet de détecter les mouvements de la tige de palpeur 81. Ce détecteur est, par exemple un détecteur magnétique. La tige 81 est alors un matériau de bonne perméabilité magnétique ou comporte une pièce présentant une bonne perméabilité magnétique de façon que le détecteur puisse détecter ses déplacements.

Le palpeur 83 est emboîté sur la tige 82.

L'extrémité du palpeur 83 est prévue pour être en contact ou quasiment en contact avec la jupe 3 lorsque le servomoteur est au repos (absence d'ordre de commande de freinage).

Lorsqu'une commande de freinage est appliquée au servomoteur d'assistance au freinage, la jupe 3 se déplace vers la gauche (sur la figure 2). Le palpeur 83 est poussé vers la gauche également.

Le détecteur 71 détecte le mouvement vers la gauche de la tige de palpeur 82.

L'invention prévoit que le détecteur 71 est mobile par rapport à la pièce de montage 81. Il est donc possible d'effectuer le réglage du détecteur en accord avec le type de servomoteur d'assistance au freinage et notamment en fonction de la distance qui sépare la paroi 50 du servomoteur de la jupe 3 lorsque celle-ci est position de repos. Le dispositif de détection selon l'invention est donc adaptable à différents types de servomoteur d'assistance au freinage. Avantageusement, on pourra prévoir un lot de tiges de palpeur et/ou de palpeur de longueurs différentes pour pouvoir adapté le dispositif de détection aux différents servomoteurs possibles.

L'invention a également pour objet un procédé de montage et de réglage d'un dispositif de détection. Ce procédé prévoit des étapes suivantes:
- choix d'une tige de palpeur 82 et d'un palpeur 83 dont les longueurs sont adaptées à un servomoteur d'assistance au freinage sur lequel doit être monté le dispositif de détection et notamment à la distance qui sépare la paroi avant 50 de ce servomoteur de la jupe 3 lorsque le servomoteur est au repos (absence de commande freinage),
- mise en place de la tige 82 dans le trou 86 de la pièce de montage 81,
- mise en place du détecteur 71 sur la pièce de montage 81,
- mise en place et fixation de la pièce de montage 81 sur la paroi avant 50 du servomoteur d'assistance au freinage,
- réglage de la position du détecteur 71 selon l'axe XX' sur la pièce de montage,
- fixation du détecteur 71 sur la pièce de montage à l'aide du dispositif d'immobilisation 72.

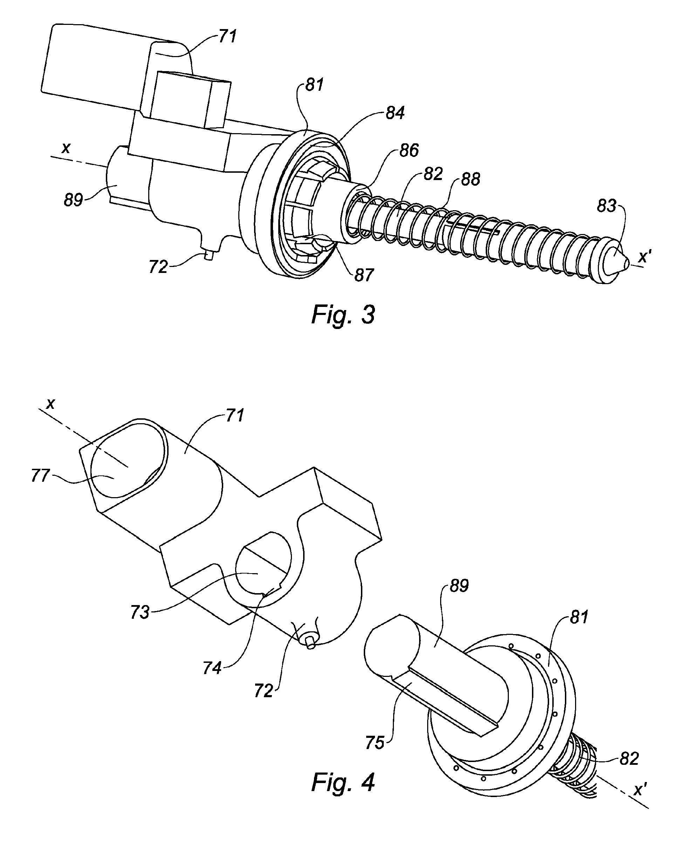

En se reportant à la figure 3, on va maintenant décrire un exemple de réalisation du dispositif de détection selon l'invention.

Ce dispositif comporte une pièce de montage 81 destinée à être montée sur la paroi 50 du servomoteur d'assistance au freinage. Pour réaliser ce montage, la pièce 81 comporte avantageusement un dispositif à cannelures ou à cliquets 87 permettant de la fixer dans un trou de la paroi 50. Un joint d'étanchéité 84 est prévu pour réaliser une étanchéité entre la pièce de montage 81 et la paroi 50.

La tige de palpeur est montée coulissante dans un trou axial 86 de la pièce de montage. Le palpeur 83 est monté avec serrage sur la tige de palpeur avec un ressort 88 qui tend à écarter le palpeur de la pièce de montage 81 et qui tend donc à le rapprocher de la jupe 3 (sur la figure 2).

Le détecteur 71 comporte un trou 73 permettant de monter le détecteur sur la surface 89 de la pièce de montage 81. Une vis 72 (de préférence une vis pointeau) traverse un trou fileté prévu dans la paroi du détecteur 71 de façon à pouvoir entrer en contact avec la surface 89 et à bloquer en position le détecteur sur la pièce de montage 81.

Avantageusement, le détecteur étant supposé être un détecteur magnétique, la pièce de montage est une pièce possédant une faible perméabilité magnétique. Elle est par exemple en matériau plastique ou en matériau à base d'aluminium.

Selon une variante de réalisation, le détecteur 71 de la figure 3 est en réalité un support de détecteur. Comme cela est visible sur la figure 4, ce support comporte alors une cavité 77 destinée à recevoir un détecteur. Avantageusement ce support de détecteur 71 est alors en matériau présentant une faible perméabilité magnétique.

Sur la figure 4, on voit également, que la surface 89 de la pièce de montage 81 possède une cannelure 75 et que le détecteur (ou support de détecteur) 71 comporte une rainure 74 qui est destinée à coulisser le long de la cannelure 75.

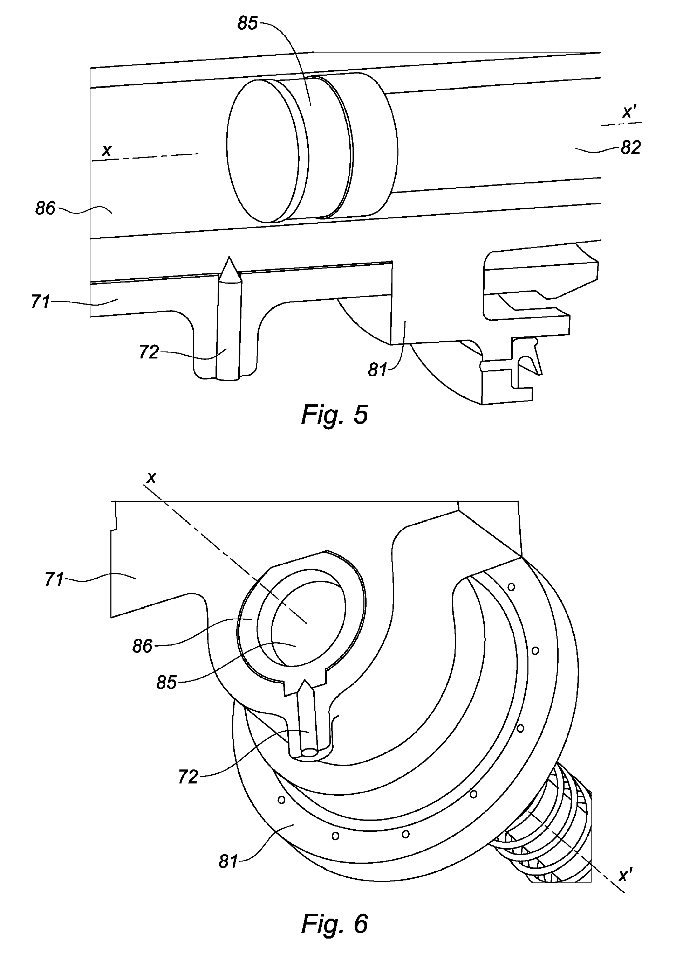

La figure 5 représente une coupe axiale partielle (selon l'axe XX') de la pièce de montage de montage 81 et du détecteur 71. La figure 6 est une coupe transversale à l'axe XX' de ces pièces. Sur ces figures, on voit que la vis 72 permet de fixer le détecteur è pièce de montage 81.

La figure 5 représente une variante de réalisation dans laquelle la tige de palpeur 82 comporte une bague 85. Cette bague est matériau présentant une bonne perméabilité magnétique ou est en matériau magnétique. Sa position sur la tige de palpeur est telle qu'elle est à proximité du détecteur de façon que celui-ci détecte son déplacement. Dans cette forme de réalisation, la tige de palpeur 82 est avantageusement en matériau de faible perméabilité magnétique tel q'un matériau plastique ou à base d'aluminium.

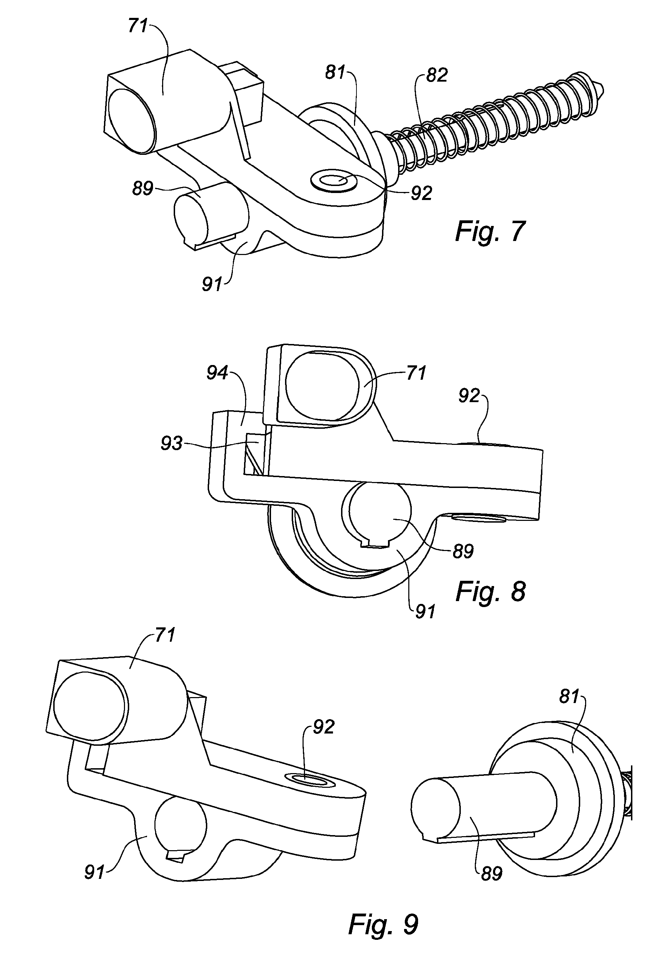

Les figures 7 à 9 représente une variante de réalisation de l'invention qui diffère des exemples de réalisation précédemment décrits par la conception du dispositif d'immobilisation du détecteur (ou du support de détecteur) 71 sur la pièce de montage 81. Dans la description qui va suivre on désignera la pièce 71 par l'appellation détecteur mais elle pourrait être simplement, sans sortir du cadre l'invention, un support de détecteur.

Selon cette variante, il est prévu une bride montage 91 qui coopère avec le détecteur 71 pour enserrer la surface 89 de la pièce de montage. Une vis 92 permet de serrer la bride 91 contre le détecteur 71.

Comme cela est plus particulièrement visible sur la figure 8, la bride 91 et le détecteur 71 comportent un système à cliquet 93, 94 qui maintient un côté de la bride contre le détecteur tandis que l'autre côté de la bride est serré contre le détecteur à l'aide de la vis 92.

## Revendications

1. Dispositif de détection du fonctionnement d'un servomoteur d'assistance au freinage pour véhicule automobile, lequel comporte une paroi mobile ou jupe (3) qui permet de transmettre une force de freinage amplifiée à un maître cylindre de frein, ledit dispositif de détection étant destiné à être monté sur une paroi (50) du servomoteur d'assistance au freinage et possédant un palpeur mobile (82, 83) destiné à être en contact avec ladite jupe (3), le dispositif de détection détectant un déplacement du palpeur (83), **caractérisé en ce qu'**il comporte une pièce de montage (81) qui est destinée à être fixée à ladite paroi (50) du servomoteur d'assistance au freinage (5), le palpeur mobile (82, 83) étant monté en coulissement dans cette pièce de montage (81) et un support de détecteur (71) étant monté en coulissement sur cette pièce de montage (81), un dispositif d'immobilisation (72) permettant d'immobiliser le support de détecteur (71) sur la pièce de montage (81).

2. Dispositif de détection selon la revendication 1, **caractérisé en ce que** la pièce de montage (81) comporte une surface de montage (89) et **en ce que** le support de détecteur (71) possède une pièce de coulissement (73, 74) qui entoure ladite surface de montage, le dispositif d'immobilisation comportant une tige de verrouillage (72) destinée à traverser la pièce de coulissement (73, 74) et à être en contact avec ladite surface de montage (89).

3. Dispositif de détection selon la revendication 2, **caractérisé en ce que** la tige de verrouillage est une vis (72).

4. Dispositif de détection selon la revendication 1, **caractérisé en ce que** la pièce de montage (81) comporte une surface de montage (89) et **en ce qu'**il comporte une bride de montage (91) qui coopère avec le support de détecteur (71) pour enserrer la surface de montage (89), un dispositif de blocage (92) permettant de serrer la bride (91) contre le support de détecteur (71).

5. Dispositif de détection selon la revendication 4, **caractérisé en ce que** ledit dispositif de blocage (92) permettant de serrer la bride contre le support détecteur est une vis.

6. Dispositif de détection selon l'une quelconque des revendications précédentes, **caractérisé en ce que** le support de détecteur (71) comporte un détecteur.

7. Dispositif de détection selon la revendication 6, **caractérisé en ce que** ledit détecteur et le support de détecteur (71) sont en une seule pièce

8. Dispositif de détection selon la revendication 6, **caractérisé en ce que** le détecteur est un détecteur magnétique.

9. Dispositif de détection selon la revendication 8, **caractérisé en ce que** le support de détection (71) et la pièce de montage (81), sont en matériaux de faibles perméabilités magnétiques.

10. Dispositif de détection selon la revendication 9, **caractérisé en ce que** le palpeur (82, 83) est en matériau de bonne perméabilité magnétique.

11. Dispositif de détection selon la revendication 9, **caractérisé en ce que** le palpeur (82, 83) est en matériau de faible perméabilité magnétique et ce qu'il comporte un élément (85) en matériau aimanté ou de bonne perméabilité magnétique.

12. Dispositif de détection selon la revendication 11, **caractérisé en ce que** ledit élément est une bague placée autour dudit palpeur.

13. Procédé de réglage d'un servomoteur selon l'une quelconque des revendications précédentes, **caractérisé en ce qu'**il comporte les étapes suivantes:
- choix d'un palpeur (82, 83) dont la longueur est adaptée à un servomoteur d'assistance au freinage sur lequel doit être monté le dispositif de détection et notamment à la distance qui sépare une face (50) de ce servomoteur de sa jupe (3) lorsque le servomoteur est au repos (absence de commande freinage),
- mise en place du palpeur (82, 83) dans la pièce de montage (81),
- mise en place du support de détecteur (71) sur la pièce de montage (81),
- mise en place et fixation de la pièce de montage (81) sur ladite face (50) du servomoteur d'assistance au freinage,
- réglage de la position du support de détecteur (71) sur la pièce de montage (81),
- fixation du support de détecteur (71) sur la pièce de montage à l'aide du dispositif d'immobilisation (72, 91, 92).

14. Servomoteur d'assistance au freinage **caractérisé en ce qu'**il comporte un dispositif de détection selon l'une quelconque des revendications 1 à 12.

15. Servomoteur d'assistance au freinage **caractérisé en ce qu'**il applique le procédé selon la revendication 13.
